# EUROPÄISCHE PATENTSCHRIFT

(11) **EP 1 198 309 B1**
(45) Veröffentlichungstag und Bekanntmachung des Hinweises auf die Patenterteilung: **05.03.2003**
(21) Anmeldenummer: 00954283.8
(22) Anmeldetag: 14.06.2000
(51) Int. Cl.: B21J 15/02, B21J 15/12

(54) **VERFAHREN, VORRICHTUNG SOWIE HILFSFÜGETEIL ZUM MECHANISCHEN FÜGEN**
METHOD, DEVICE AND AUXILIARY JOINING PART FOR EFFECTING A MECHANICAL JOINING
PROCEDE, DISPOSITIF ET PIECE D'AIDE A L'ASSEMBLAGE POUR REALISER UN ASSEMBLAGE MECANIQUE

(30) Priorität: 14.06.1999 DE 19927103
(43) Veröffentlichungstag der Anmeldung: 24.04.2002
(73) Patentinhaber: Technische Universität Dresden, 01069 Dresden (DE)
(72) Erfinder: MAUERMANN, Reinhard, D-01309 Dresden (DE); VOELKNER, Wolfgang, D-01239 Dresden (DE); BERGER, Günter, D-01237 Dresden (DE)
(86) Internationale Anmeldenummer: DE0002010
(87) Internationale Veröffentlichungsnummer: WO00076688

(56) Entgegenhaltungen:
- EP-A- 0 893 180
- DE-A- 4 333 052
- DE-A- 19 602 075
- DE-A- 19 701 150

## Beschreibung

Die Erfindung betrifft ein Verfahren, eine Vorrichtung sowie ein Hilfsfügeteil zum mechanischen Fügen mittels Stanznieten gemäß den Oberbegriffen der Ansprüche 1, 5 und 8.

Beim bekannten Stanznieten mit Halbhohlnieten wird das Hilfsfügeteil (der Niet) mit einer geradlinigen Bewegung ohne Vorloch in die zu verbindenden Bleche gefügt.

In der DE 43 33 052 A1 wird ein Halbhohlniet zum Stanznieten beschrieben wird. Der Niet besteht aus einem Nietkopf und einem Nietschaft mit einer zentrischen Ausnehmung. Die Ausnehmung ist im dem Nietkopf abgewandten Ende des Nietschaftes im wesentlichen konusförmig mit einem Öffnungswinkel ausgebildet. Weiterhin ist der Übergang des Nietschaftes zur Unterseite des Nietkopfes im wesentlichen gerundet ausgebildet. Der Niet weist einen planen Nietkopf und einen zylindrischen Nietschaft auf.

Aus der DE 196 02 075 A1 ist ebenfalls ein Stanzniet bekannt, der zum Stanznieten geeignet ist. Der Niet weist am Nietkopf eine konvexe Erhebung auf. Der Nietschaft ist im wesentlichen zylindrisch ausgebildet.

Beim bekannten Clinchen, auch Durchsetzfügen genannt, dringt ein Stempel beim Arbeitshub in einer geradlinigen Bewegung in die zu verbindenden Bleche ein, wobei auf der Gegenseite eine feste oder geteilte Matrize die Form der sogenannten Matrizenseite des Clinchpunktes mit ausbildet. In der geteilten Matrize wird ein Gegenstempel positioniert.

Die bekannte Bewegung des Taumelns wird eingesetzt, wenn mit partieller Druckumformung auf der Stirnseite ein Nietkopf angeformt werden soll.

Auch beim Clinchen, dem Fügen ohne Hilfsfügeteil (DE 199 45 743.3), wird diese Bewegung bereits genutzt.

Beim bekannten Stanznieten werden mit der geradlinigen Stempelbewegung hohe Kräfte benötigt. Deshalb sind die Werkzeugbelastungen hoch und schränken die Anwendung bei hochfesten Blechen ein.

Für die überwiegend als Werkzeuggestell eingesetzten C-Bügel wird mit hohen Kräften die Ausladung und damit die Anwendbarkeit des Verfahrens eingegrenzt.
Durch den Werkstoffluß von Blechmaterial und die zusätzlichen Verformung des Hilfsfügeteils ergibt sich bei der geradlinigen Stempelbewegung eine spezifische Ausformung der Verbindung.

Die Aufgabe der Erfindung besteht darin, die beim Stanznieten auftretenden Kräfte zu senken. Damit sollen die Anwendungsgebiete bezüglich hochfester Werkstoffe und die Zugänglichkeit bei großen Bauteilen mit C-Bügeln wesentlich erweiterbar sein. Außerdem sollen die Schwachstellen Kopfeinzug und geringe Aufspreizung beseitigt und damit bei der gleichen Fügeaufgabe bessere optische Eigenschaften und eine höhere Verbindungsfestigkeit erzielt werden.

Erfindungsgemäß wird die Aufgabe durch ein Verfahren in Verbindung mit den im Oberbegriff des Anspruchs 1 genannten Merkmalen dadurch gelost, daß während der axialen Vorschubbewegung des Halbhohlnietes Oberwerkzeug oder/und ein Teil des Unterwerkzeuges mit einer taumelnden Zusatzbewegung in radialer und/oder tangentialer Richtung beaufschlagt wird/werden.

Diese Zusatzbewegung wird während des ganzen Fügeprozesses oder während eines Teiles des Fügeprozesses der axialen Vorschubbewegung überlagert. Das Taumeln kann tangential, z.B. auf einer Kreisbewegung, radial vom Mittelpunkt nach außen, z.B. auf einer Schwenkbewegung und in einer kombinierten Bewegung tangential/radial, z.B. in einer Rosettenkinematik erfolgen.
Durch die Taumelbewegung wird der Werkstoff partiell umgeformt, so daß die Prozeßkräfte deutlich sinken.

Vorteilhaft wird beim Stanznieten mit Halbhohlniet ein Niet verwendet, dessen Nietkopf eine konvexe Erhebung aufweist und dessen Innenkontur und Außenkontur des Nietschaftes vom Nietfuß ausgehend zum Nietkopf verlaufend so ausgeformt sind, daß sich eine stetige Steigerung der Querschnittsfläche ergibt.

Vorteilhaft ist es auch, bei gleichzeitiger aktiver Zusatzbewegung von Ober- und einem Teil des Unterwerkzeuges, diese eine synchronisierte Bewegung so ausführen zu lassen, dass sich die eingeleiteten axialen Kräfte der Stempel direkt gegenüber liegen.

Erfindungsgemäß wird die Aufgabe weiterhin durch eine Vorrichtung in Verbindung mit den im Oberbegriff des Anspruchs 5 genannten Merkmalen dadurch gelöst, daß das Oberwerkzeug oder/und ein Teil des Unterwerkzeuges als Gegenstempel in radialer und/oder tangentialer Richtung taumelbar gelagert ist/sind.

Bei der erfindungsgemäßen Vorrichtung wird wenigstens eines der Werkzeuge (Oberwerkzeug, ein Teil des Unterwerkzeuges als Gegenstempel) zusätzlich zur bekannten axialen Vorschubbewegung taumelnd ausgelenkt. Beide gegenüberliegenden Werkzeuge können gleichzeitig und in einer besonderen Ausführung synchronisiert diese Taumelbewegung durchführen.

Vorteilhaft ist die Matrize der Vorrichtung eine geteilte Matrize. Damit läßt sich ein spezieller Werkstofffluß auf der Matrizenseite der Fügeverbindung realisieren.

Bei einer Ausführung der Vorrichtung mit nur einem taumelnden Oberwerkzeug werden die sonst einzelnen Teile des Unterwerkzeuges als ein Teil ausgeführt.

Erfindungsgemäß wird die Aufgabe außerdem durch ein Hilfsfügeteil in Verbindung mit den im Oberbegriff des Anspruchs 8 genannten Merkmalen dadurch gelöst, daß die Innenkontur und die Außenkontur des Nietschaftes vom Nietfuß ausgehend zum Nietkopf verlaufend so ausgeformt sind, daß sich eine stetige Steigerung der Querschnittsfläche des Nietschaftes ergibt.

Vorteilhaft ist die Innen- und Außenkontur des Halbhohlnietes durch jeweils zwei Schleppkurven beschreibbar, wobei die Startpunkte der Kurven jeweils Ricktung Nietfuß und Nietkopf liegen und der Übergang der Kurven in der Mitte tangential ausgeformt ist.

Die Erfindung wird nachfolgend an Ausführungsbeispielen an Hand schematischer Zeichnungen näher erläutert. Es zeigen:
- Fig. 1: eine Darstellung zum Stanznieten nach dem Stand der Technik
- Fig. 2: einen erfindungsgemäßen Halbhohlniet.
- Fig. 3: eine Darstellung zum Stanznieten mit überlagerter Taumelbewegung

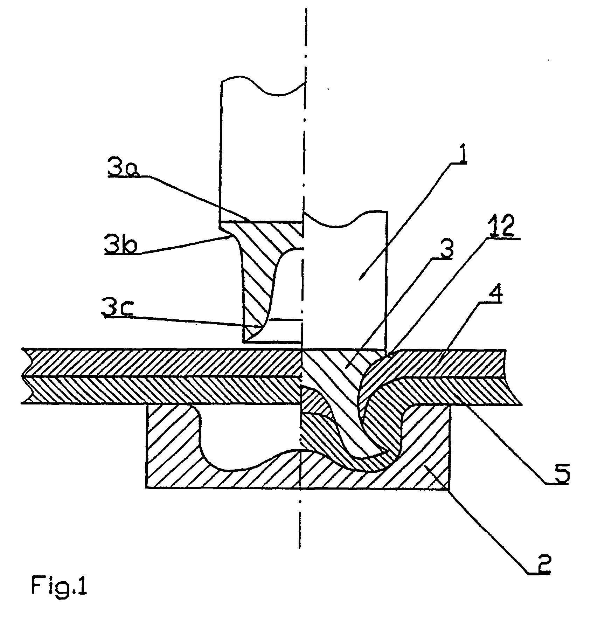

In **Fig.1** ist das bekannte Stanznieten mit Stempel **1** und fester Matrize **2** dargestellt. Der Standardhalbhohlniet **3** dringt in einer axialen Bewegung in die zu verbindenden Bleche **4** und **5** ein. Dieser Niet besitzt üblicherweise eine flache Kopfform **3a**, einen Radius **3b** und eine Fase **3c**.

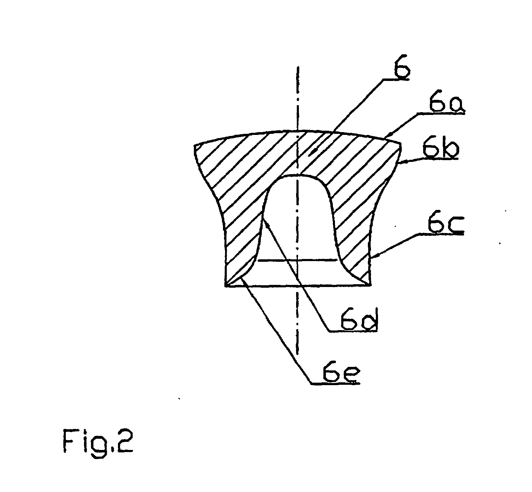

In **Fig. 2** ist ein der Taumelbewegung angepaßter Halbhohlniet 6 dargestellt. Er besitzt eine Materialanhäufung in Form einer konvexen Erhebung am Nietkopf **6a**. Die Krafteinleitung wird dadurch im ersten Teil des Prozesses mehr auf den Bereich der Nietkopfmitte konzentriert, von wo die Schneidkräfte zum Trennen des oberen Bleches auf den Nietfuß geleitet werden. Der Randbereich des Nietkopfes wird erst am Ende des Fügevorganges, wenn der gesamte Nietkopf flachgeformt wird, plastiziert. Das zusätzliche Nietmaterial aus der konvexen Erhebung wird beim Flachformen radial nach außen verdrängt. Mit der sich ergebenden Durchmesservergrößerung des Nietkopfes wird der Einzugsbereich **12** im oberen Blech verkleinert.
Weiter werden die Konturen des Halhohlnietes **6** durch jeweils zwei Schleppkurven beschrieben.
Die Startpunkte der Schleppkurvenaußenkontur liegen am Nietfüß (Kurve **6c**) und am Nietkopf (Kurve **6b**). Die Startpunkte der Innenkontur liegen ebenfalls am Nietfuß (Kurve **6e**) und am oberen Punkt der Innenkontur (Kurve **6b**).
Die innenliegenden Kurven **6d** und **6e** und die außenliegenden Kurven **6b** und **6c** sind jeweils durch einen tangentialen Übergang miteinander verbunden. Ziel ist es, die Querschnittsfläche des Nietes, die im unteren Teil eine Ringfläche und im oberen eine Kreisfläche darstellt, stetig vom Nietfüß aus zu steigern. Dadurch kann in jedem Querschnitt dem vom Nietfüß aus zunehmenden Biegemoment beim Fügen Rechnung getragen werden und es entsteht keine Schwachstelle an Fasen- bzw Radienübergängen. Durch diese Gestaltung des Hilfsfügeteiles können die Belastungen während der partiellen Umformung besser aufgenommen und das unerwünschte Stauchen des Nietfußes verringert werden. Es ergibt sich eine bessere Aufspreizung und damit eine höhere Verbindungsfestigkeit.

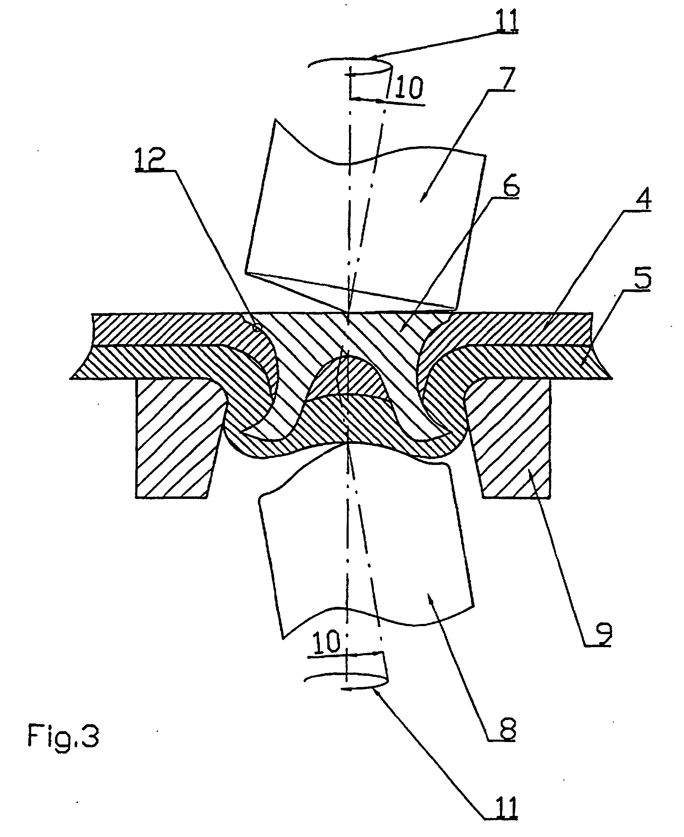

In **Fig. 3** ist der Nietvorgang mit überlagerter Taumelbewegung **11** in seiner Endstellung dargestellt. Als Taumelbewegung **11** ist eine Bewegung überlagert, welche die Form einer Rosette oder eines Kreises beschreibt. Die synchronisiert taumelnden Werkzeuge Oberwerkzeug **7** - Stempel - und Unterwerkzeug **8** - hier der Gegenstempel als Teil des Unterwerkzeuges -
schwenken unter einem maximalen Taumelwinkel **10**, wobei dieser Winkel zwischen 1° und 10° liegen kann und vorzugsweise 3° beträgt.

### Bezugszeichenliste

- 1-: Stempel
- 2 -: feste Matrize
- 3 -: Standardhalbhohlniet
- 3a -: flacher Kopf
- 3b -: Radius
- 3c -: Fase
- 4 -: stempelseitiges Blech
- 5 -: matrizenseitiges Blech
- 6 -: Halbhohlniet
- 6a -: konvexe Erhebung am Nietkopf
- 6b -: obere kleinere Schleppkurve an der Außenkontur
- 6c -: untere größere Schleppkurve an der Außenkontur
- 6d -: obere kleinere Schleppkurve an der Innenkontur
- 6e -: untere größere Schleppkurve an der Innenkontur
- 7 -: Oberwerkzeug
- 8 -: Teil des Unterwerkzeuges
- 9 -: geteilte Matrize mit Innenkonus
- 10 -: Taumelwinkel
- 11 -: Taumelbewegung
- 12 -: Einzug

## Patentansprüche

1. Verfahren zum mechanischen Fügen von übereinander angeordneten plattenförmigen Fügepartnern, insbesondere von Blechen (4,5), mittels Stanznieten mit Halbhohlniet, unter Einsatz von oberhalb und unterhalb der Fügepartner vorgesehenen Werkzeugen, wobei der Halbhohlniet geradlinig in die Fügepartner eindringt, **dadurch gekennzeichnet, daß** während der axialen Vorschubbewegung des Halbhohlnietes Ober- (7) oder/und ein Teil (8) des Unterwerkzeuges mit einer taumelnden Zusatzbewegung in radialer und/oder tangentialer Richtung beaufschlagt wird/werden.

2. Verfahren nach Anspruch 1, **dadurch gekennzeichnet, daß** ein Halbhohlniet verwendet wird, dessen Nietkopf (6a) eine konvexe Erhebung aufweist und dessen Innenkontur (6d, 6e) und Außenkontur (6b, 6c) des Nietschaftes vom Nietfuß ausgehend zum Nietkopf verlaufend mit einer stetigenSteigenung der Querschnittsfläche ausgeformt ist.

3. Verfahren nach Anspruch 1 oder 2, **dadurch gekennzeichnet, daß** bei gleichzeitiger taumelnder Zusatzbewegung von Ober- (7) und Teil (8) des Unterwerkzeuges diese eine synchronisierte Bewegung ausführen.

4. Verfahren nach einem der Ansprüche 1 bis 3, **dadurch gekennzeichnet, daß** die taumelnde Zusatzbewegung mit einem Taumelwinkel (10) zwischen 1° und 10° ausgeführt wird.

5. Vorrichtung zur Durchführung des Verfahrens nach einem der Ansprüche 1 bis 4, bestehend aus einem Oberwerkzeug (7), einem Unterwerkzeug (8, 9), einer in axialer Richtung feststehenden Matrize (9) und einer Zuführung für das Hilfsfügeteil, **dadurch gekennzeichnet, daß** das Ober- (7) oder/und ein Teil (8) des Unterwerkzeuges in radialer und/oder tangentialer Richtung taumelbar gelagert ist/sind.

6. Vorrichtung nach Anspruch 5, **dadurch gekennzeichnet, daß** die Matrize (9) eine geteilte Matrize ist.

7. Vorrichtung nach Anspruch 5, **dadurch gekennzeichnet, daß** bei einem nichttaumelnden Teil (8) des Unterwerkzeuges die einzeinen Teile (8,9) als ein Teil ausgeführt sind.

8. Hilfsfügeteil zur Durchführung des Verfahrens nach einem der Ansprüche 1 bis 4, ausgebildet als Halbhohlniet, mit einem Nietkopf und einem Nietschaft und einer konvexen Erhebung am Nietkopf (6a), **dadurch gekennzeichnet, dass** die Innenkontur (6d, 6e) und die Außenkontur (6b, 6c) des Nietschaftes vom Nietfuß ausgehend zum Nietkopf verlaufend so ausgeformt sind, dass sich eine stetige Steigerung der Querschnittsfläche des Nietschaftes ergibt.

9. Hilfsfügeteil nach Anspruch 8, **dadurch gekennzeichnet, daß** die Innenkontur (6d, 6e) und die Außenkontur (6b, 6c) des Halhohlnietes durch jeweils zwei Schleppkurven beschreibbar sind, wobei die Startpunkte der Kurven jeweils Richtung Nietfuß und Nietkopf liegen und der Übergang der Kurven in der Mitte tangential ausgeformt ist.

## Claims

1. Method for mechanical joining of stacked plate-shaped joining partners, particularly of sheets (4, 5) by means of punch riveting with semitubular rivet using tools situated above and beneath of the joining partners, whereby the semitubular rivet penetrates linearly into the joining partners **characterized in that** during the axial feeding movement of the semitubular rivet the upper tool (7) or/and a portion (8) of the lower tool is/are given a wobbling additional movement in radial and/or tangential direction(s).

2. Method to Claim 1 **characterized in that** a semitubular rivet is used whose rivet head (6a) has a convex elevation and whose inner contour (6d, 6e) and outer contour (6b, 6c) of the rivet shank are formed, starting at the rivet foot proceeding to the rivet head, with a continuously increasing cross-sectional area.

3. Method to Claim 1 or 2 **characterized in that** if the upper tool (7) and a portion (8) of the lower tool simultaneously carry out the wobbling additional movement, they carry out a synchronized movement.

4. Method to Claim 1 to 3 **characterized in that** the wobbling additional movement is carried out over a wobbling angle (10) between 1° and 10°.

5. Device for carrying out the method to any of the Claims 1 to 4, which consists of an upper tool (7), a lower tool (8, 9), a die (9) fixed in axial direction, and a feeding device for the auxiliary joining part **characterized in that** the upper tool (7) or/and a portion (8) of the lower tool is/are supported in such a way that they can be given a wobbling movement in radial and/or tangential direction(s).

6. Device to Claim 5 **characterized in that** the die (9) is a split die.

7. Device to Claim 5 **characterized in that** for a non-wobbling portion (8) of the lower tool the parts (8, 9) are constructed as one single part.

8. Auxiliar joining part for carrying out the process to any of the Claims 1 to 4 designed as a semitubular rivet with a rivet head and a rivet shank and a convex elevation at the rivet head (6a), **characterized in that** the inner contour (6d, 6e) and the outer contour (6b, 6c) of the rivet shank are formed, starting at the rivet foot proceeding to the rivet head, such that a continuously increasing cross-sectional area is created.

9. Auxiliar joining part to Claim 8 **characterized in that** the inner contour (6d, 6e) and outer contour (6b, 6c) of the semitubular rivet can be described by two tractrix curves in each case, whereby the starting points of the curves are located at positions directed to the rivet foot and rivet head and the transition of the curves in the centre is shaped to be tangential.

## Revendications

1. Procédé pour réaliser un assemblage mécanique de deux pièces superposées en plaques, notamment de tôles (4, 5), à l'aide de rivets de poinçonnage avec rivet semi-tubulaire, avec recours à des outils aménagés au-dessus et au-dessous des pièces à assembler ; le rivet semi-tubulaire pénètre en ligne droite dans les pièces d'assemblage, **caractérisé par le fait que** pendant l'avancement axial du rivet semi-tubulaire, l'outil supérieur (7) ou/et une partie (8) de l'outil inférieur est/sont encore mis en mouvement chancelant en direction radiale et/ou tangentielle.

2. Procédé conforme à la revendication n°. 1, **caractérisé par** l'emploi d'un rivet semi-tubulaire qui a une bosse convexe sur sa tête de rivet (6a) et qui a une tige avec un contour intérieur (6d, 6e) et un contour extérieur (6b, 6c) réalisés de manière à ce que la superficie de la section à partir du pied de rivet jusqu'à la tête de rivet augmente constamment.

3. Procédé conforme aux revendications n°. 1 ou 2, **caractérisé par le fait que**, lors du mouvement chancelant effectué en même temps par la partie supérieure (7) et la partie (8) de l'outil inférieur, celles-ci sont en mouvement synchronisé.

4. Procédé conforme à l'une des revendications n°. 1 à 3, **caractérisé par le fait que** le mouvement chancelant est effectué avec un angle d'oscillation (10) compris entre 1° et 10°.

5. Dispositif destiné à réaliser le procédé conforme à l'une des revendications n°. 1 à 4, composé d'un outil supérieur (7), d'un outil inférieur (8, 9), d'une matrice à position axiale fixe (9) et d'un mécanisme d'acheminement pour la pièce d'aide à l'assemblage, **caractérisé par le fait que** la partie supérieure (7) ou/et une partie (8) de l'outil inférieur sont aménagées de manière à ce qu'elles puissent effectuer des mouvements chancelants en direction radiale et/ou tangentielle.

6. Dispositif conforme à la revendication n°. 5, **caractérisé par le fait que** la matrice (9) est une matrice segmentée.

7. Dispositif conforme à la revendication n°. 5, **caractérisé par le fait que** les pièces (8, 9) d'une partie non chancelante (8) de l'outil inférieur sont faites d'une seule pièce.

8. Pièce d'aide à l'assemblage destiné à réaliser le procédé conforme à l'une des revendications n°. 1 à 4, en forme d'un rivet semi-tubulaire, disposant d'une tête et d'une tige de rivet ainsi que d'une bosse convexe sur la tête de rivet (6a), **caractérisé par le fait que** le contour intérieur (6d, 6e) et le contour extérieur (6b, 6c) sont réalisés de manière à ce que la superficie de la section à partir du pied de rivet jusqu'à la tête de rivet augmente constamment.

9. Pièce d'aide conforme à la revendication n°. 8, **caractérisé par** les faits que le contour intérieur (6d, 6e) et le contour extérieur (6b, 6c) peuvent être représentés chacun par deux tractoires, que les points de départ des courbes visent toujours en direction du pied et de la tête de rivet, et qu'au milieu, la transition des courbes est d'une forme tangentielle.
